# EUROPÄISCHE PATENTANMELDUNG

(11) **EP 4 215 065 A2**
(43) Veröffentlichungstag der Anmeldung: **26.07.2023**
(21) Anmeldenummer: 23150917.5
(22) Anmeldetag: 10.01.2023
(51) Int. Cl.: A24C 5/01, A24C 5/32, B65G 47/24, A24D 3/02

(54) **HANDHABUNGSVORRICHTUNG FÜR STABFÖRMIGE ARTIKEL DER TABAK VERARBEITENDEN INDUSTRIE**

(30) Priorität: 21.01.2022 DE 102022101392
(71) Anmelder: Körber Technologies GmbH, 21033 Hamburg (DE)
(72) Erfinder: Schulenburg, Tobias, 21109 Hamburg (DE); Rekowski, Rafael, 21035 Hamburg (DE); Springborn, Dennis, 21035 Hamburg (DE); Adolff, Dr. Christian Frederic, 21033 Hamburg (DE)
(74) Vertreter: Seemann & Partner Patentanwälte mbB

(57) **Zusammenfassung**

Die Erfindung betrifft eine Handhabungsvorrichtung (2) für stabförmige Artikel (10-13) der Tabak verarbeitenden Industrie, wobei die stabförmigen Artikel (10-13) magnetisches oder magnetisierbares Material, insbesondere ein Metallband (10a), enthalten, wobei die Handhabungsvorrichtung (2) eine Fördervorrichtung (4) mit Aufnahmen (8) zur Aufnahme der stabförmigen Artikel (10-13) umfasst, und wobei die Handhabungsvorrichtung (2) einen ersten Magneten (20) aufweist, wobei die Fördervorrichtung (4) ausgebildet ist, in einem Wirkbereich des ersten Magneten (20) die Aufnahmen (8) in einer Förderrichtung (21) zu bewegen.

Die Erfindung zeichnet sich dadurch aus, dass in Förderrichtung (21) der Aufnahmen (8) der erste Magnet (20) eine wechselnde Polung (N, S) aufweist. Die Erfindung betrifft ferner ein Verfahren zum Bearbeiten von stabförmigen Artikeln (10-13) der Tabak verarbeitenden Industrie, bei der stabförmige Artikel (10-13) durch ein Magnetfeld (19) gefördert werden, dessen Feldlinien (23) in einem Winkel von -30° bis +30° zu der Förderrichtung (21) angeordnet sind.

## Beschreibung

Die Erfindung betrifft eine Handhabungsvorrichtung für stabförmige Artikel der Tabak verarbeitenden Industrie, wobei die stabförmigen Artikel magnetisches oder magnetisierbares Material, insbesondere ein, insbesondere flaches, Metallband, enthalten, wobei die Handhabungsvorrichtung eine Fördervorrichtung mit Aufnahmen zur Aufnahme der stabförmigen Artikel umfasst, und wobei die Handhabungsvorrichtung einen ersten Magneten aufweist, wobei die Fördervorrichtung ausgebildet ist, in einem Wirkbereich des ersten Magneten die Aufnahmen in einer Förderrichtung zu bewegen.

Die Erfindung betrifft ferner eine Maschine der Tabak verarbeitenden Industrie, umfassend eine Handhabungsvorrichtung. Außerdem betrifft die Erfindung ein Verfahren zum Bearbeiten von stabförmigen Artikeln der Tabak verarbeitenden Industrie, wobei die stabförmigen Artikel magnetisches oder magnetisierbares Material, insbesondere ein, insbesondere flaches, Metallband, enthalten.

In Artikeln der Tabak verarbeitenden Industrie können bei Bedarf Metallkörper, insbesondere in Form von flachen Metallbändern oder -streifen, zum Einsatz kommen, die in den Basisstäben enthalten sind, wie beispielsweise in der WO 2017/072149 A1 beschrieben ist. Bei den Artikeln der Tabak verarbeitenden Industrie handelt es sich insbesondere um Zwischenprodukte zur Herstellung von Zigaretten oder auch um fertige Produkte wie Zigaretten, wobei die Basisstäbe bevorzugt rauchbares Material wie Tabakmaterial aufweisen, in dem der mindestens eine Metallkörper eingebracht ist. Insbesondere handelt es sich bei den Artikeln der Tabak verarbeitenden Industrie im vorliegenden Kontext um sog."heat-not-burn"-Artikel, in denen Metallstreifen eingesetzt sind, um die Erzeugung der benötigten Hitze zu ermöglichen, zu unterstützen und/oder zu beeinflussen. Dies lässt sich mittels Induktion realisieren, sofern der Metallstreifen ferromagnetisches Material aufweist.

Die Basisstäbe werden in einem weiteren Prozess einfach oder auch mehrfach geschnitten, nicht zuletzt um die Bildung von grundsätzlich eher schwer zu handhabenden kurzen Stäben oder Stöpseln möglichst spät im Prozess vorzunehmen.

Die für den Schneideprozess eintreffenden Basisstäbe nehmen hinsichtlich der Orientierung der Metallkörper oder flachen Metallbänder gegenüber dem Messer eine zufällige Position oder Lage ein. Dies führt dazu, dass abhängig von der Orientierung der Metallkörper oder flachen Metallbänder zum Messer der Widerstand beim Schneiden unterschiedlich ist. Dies hat Auswirkungen auf den Schneideprozess und insbesondere auf das Schneideergebnis und auch den Verschleiß des Messers. In bestimmten Positionen der Artikel oder Basisstäbe, in denen die Metallkörper oder flachen Metallbänder eine entsprechende Orientierung einnehmen, kann es passieren, dass der Schneideprozess nur unter größeren Schwierigkeiten zu bewerkstelligen ist und nicht zu dem gewünschten Schneideergebnis führt, insbesondere wenn die Metallkörper oder flachen Metallbänder aufgrund ihrer Lage einen erhöhten Schneidewiderstand erzeugen oder zu einer besonders starken Nachgiebigkeit der Basisstäbe führen, wodurch ebenfalls ein effektives Schneiden verhindert wird.

Aus EP 3 461 352 A1 ist eine Vorrichtung zur Bearbeitung von Artikeln der Tabak verarbeitenden Industrie der mindestens einen Körper aus magnetischem oder magnetisierbarem Material enthaltenen Art, mit mindestens einer Halterungseinrichtung zum Halten mindestens eines derartigen Artikels bekannt, wobei die Halterungseinrichtung derart ausgebildet ist, dass sie während des Haltens des Artikels zumindest temporär eine Änderung der Position des Artikels zulässt, und eine Magnetisierungseinrichtung vorgesehen ist, den von der Halterungseinrichtung gehaltenen Artikel in eine definierte Position zu verbringen. Hierbei wird eine Magnetvorrichtung, die von einer Seite oder von zwei Seiten auf den metallischen Körper in dem stabförmigen Artikel einwirkt, verwendet, die zum stabförmigen Artikel hin einen magnetischen Pol aufweist, so dass sich Feldlinien ergeben, die im Wesentlichen radial durch eine Aufnahme der Halterungseinrichtung führen. Zur Verstärkung des Ausrichtungseffektes ist ein Anker vorgesehen, der zur Durchführung der Aufnahmen der Halterungseinrichtung und der in den Aufnahmen angeordneten stabförmigen Artikel eine Lücke aufweist, in der das Magnetfeld konzentriert wird.

Es ist Aufgabe der vorliegenden Erfindung, eine Handhabungsvorrichtung für stabförmige Artikel der Tabak verarbeitenden Industrie, eine Maschine der Tabak verarbeitenden Industrie und ein Verfahren zum Bearbeiten von stabförmigen Artikel der Tabak verarbeitenden Industrie anzugeben, mittels derer ein im Hinblick auf das hergestellte Produkt optimaler Schnittwinkel sowie eine höhere Standzeit der Schneidvorrichtung ermöglicht ist.

Gelöst wird diese Aufgabe durch eine Handhabungsvorrichtung für stabförmige Artikel der Tabak verarbeitenden Industrie, wobei die stabförmigen Artikel magnetisches oder magnetisierbares Material, insbesondere ein, insbesondere flaches, Metallband, enthalten, wobei die Handhabungsvorrichtung eine Fördervorrichtung mit Aufnahmen zur Aufnahme der stabförmigen Artikel umfasst, und wobei die Handhabungsvorrichtung einen ersten Magneten aufweist, wobei die Fördervorrichtung ausgebildet ist, in einem Wirkbereich des ersten Magneten die Aufnahmen in einer Förderrichtung zu bewegen, die dadurch weitergebildet ist, dass in Förderrichtung der Aufnahmen der erste Magnet eine wechselnde Polung aufweist.

Durch die erfindungsgemäße Handhabungsvorrichtung ist eine Ausrichtung der stabförmigen Artikel möglich, die gesichert das magnetische oder magnetisierbare Material so ausrichtet, dass dieses sich in Förderrichtung flach, oder in einem vorgebbaren kleinen Winkel zu der Förderrichtung ausrichtet. Der daraufhin erfolgte Schnitt durch den stabförmigen Artikel erfolgt damit sicher von einer vorderen Kante des Metallbandes bis zu einer hinteren Kante kontinuierlich und sukzessive. Insbesondere wird verhindert, dass zunächst der hintere Teil des Metallbandes durch eine Schneidvorrichtung getroffen wird, wodurch insbesondere Schwingungen beim Schneiden vermieden werden, wodurch sich die Standzeit der Schneidvorrichtung und die Schnittqualität deutlich verbessern.

Insbesondere bedeutet das Aufweisen einer wechselnden Polung des ersten Magneten in Förderrichtung der Aufnahme, dass der Magnet quer, insbesondere senkrecht zur Förderrichtung, eine Polgrenze aufweist, so dass sich die Feldlinien des Magneten in Förderrichtung oder im Wesentlichen in Förderrichtung anordnen.

Unter einer Polgrenze wird im Rahmen dieser Anmeldung eine Fläche verstanden, die durch die Mitte des Magneten zwischen dem Südpol und dem Nordpol verläuft.

Das magnetische bzw. magnetisierbare Material ist vorzugsweise ein Metallband, das bei dem fertigen Produkt durch Induktion erhitzt werden kann, so dass beispielsweise Tabakmaterial, das in dem stabförmigen Artikel vorgesehen ist, erhitzt wird.

Besonders bevorzugt ist eine Ausgestaltung, bei der die Handhabungsvorrichtung einen zweiten Magneten aufweist, wobei der zweite Magnet gleichpolig zum ersten Magneten angeordnet ist, wobei die Aufnahme, die in dem Wirkbereich des ersten Magneten ist, zwischen dem ersten Magneten und dem zweiten Magneten angeordnet ist.

Unter gleichpolig wird im Rahmen dieser Anmeldung verstanden, dass sich zwei gleichpolig zueinander angeordnete Magneten abstoßen.

Hierdurch wird eine Erhöhung der Feldstärke der magnetischen Feldlinien durch die sich abstoßenden magnetischen Pole des ersten und des zweiten Magneten hervorgerufen, so dass ein bevorzugter homogener und über einen relativ großen Bereich tangentialer oder paralleler oder im wesentlichen paralleler Feldlinienverlauf auf der Höhe der Aufnahme, die sich zwischen den beiden Magneten befindet, erzielt wird. Zudem wird auch eine höhere magnetische Flussdichte erreicht, was zu einer vereinfachten und gesicherten Ausrichtung der stabförmigen Artikel führt. Hierbei kann zum einen eine tangentiale Ausrichtung vorgesehen sein, beispielsweise ein Winkel von 0° zur Förderrichtung. Es können allerdings auch andere hiervon abweichende Winkel vorgesehen sein. Vorzugsweise ist oder sind der erste Magnet und/oder der zweite Magnet derart angeordnet, dass die magnetischen Feldlinien im Bereich der Aufnahme, die dem ersten Magneten und/oder dem zweiten Magneten am nächsten ist, in einem Winkel von -30° bis +30° zur Förderrichtung ist.

Ein negativer Winkel ist hierbei ein Winkel im Uhrzeigersinn zur tangentialen Ausrichtung. Ein positiver Winkel ist ein Winkel gegen den Uhrzeigersinn zur tangentialen Ausrichtung.

Vorzugsweise ist der Winkel zwischen -25° und +25°, insbesondere vorzugsweise zwischen -20° und +20°, insbesondere vorzugsweise zwischen -15° und +15°, insbesondere vorzugsweise zwischen -12° und +12°, insbesondere vorzugsweise zwischen -8° und +8°, insbesondere vorzugsweise zwischen -5° und +5°. Vorzugsweise liegt der Bereich der kleinsten Winkel bei -25°, vorzugsweise bei -20°, insbesondere vorzugsweise bei - 15°, insbesondere vorzugsweise bei -12°, insbesondere vorzugsweise bei -8°, insbesondere vorzugsweise bei -5°, insbesondere vorzugsweise bei - 2°, insbesondere vorzugsweise bei -1°. Der obere Winkel liegt vorzugsweise bei +25°, insbesondere vorzugsweise bei +20°, insbesondere vorzugsweise bei +18°, insbesondere vorzugsweise bei +16°, insbesondere vorzugsweise bei +14°, insbesondere vorzugsweise bei +12°, insbesondere vorzugsweise bei +10°, insbesondere vorzugsweise bei +8°, insbesondere von vorzugsweise bei +5°.

Für den Fall, dass an der Fördervorrichtung eine Schneidvorrichtung zum Schneiden der stabförmigen Artikel vorgesehen ist, ist der eben genannte Winkel der magnetischen Feldlinien derart zu verstehen, dass sich das in dem stabförmigen Artikel befindliche Metallband durch die magnetischen Feldlinien so in der Aufnahme ausrichtet, dass sich ein Winkel der Schneidvorrichtung zu dem Metallband um den Winkel der magnetischen Feldlinien relativ zum 0°-Winkel verkleinert.

Durch den bevorzugt vorzugebenden Winkel der magnetischen Feldlinien richtet sich das Metallband in der Aufnahme so aus, dass ein optimaler Schnittwinkel eines anschließenden Messers, das im Bereich der Fördervorrichtung oder einer späteren Fördervorrichtung angeordnet sein kann relativ zu dem stabförmigen Artikel und/oder dem magnetischen oder magnetisierbaren Material im stabförmigen Artikel, erzielbar ist.

Vorzugsweise ist der Schnittwinkel, d.h. der Winkel der Schneidvorrichtung, insbesondere für den Fall, dass ein Kreismesser verwendet wird, die Tangente des Kreismessers, zu dem Metallband zwischen 5° und 50°. Der untere Schnittwinkel und der obere Schnittwinkel können jeweils bevorzugt um 2° abgestuft werden, und zwar von oben nach unten in 2°-Schritten und/oder von unten nach oben in 2°-Schritten bis zu einem Winkel von 27° oder 29°.

Ein von 0° verschiedener Winkel der magnetischen Feldlinien kann beispielsweise durch einen gezielten Versatz des ersten und/oder zweiten Magneten erzielt werden, beispielsweise durch ein translatorisches Verschieben eines der beiden Magneten in Bezug auf die Förderrichtung der stabförmigen Artikel aus einer Position, die genau gegenüber dem anderen Magneten liegt. Die translatorische Verschiebung, insbesondere quer zur Achse des Magneten geschieht bevorzugt bei einem Magneten, der außerhalb der Fördervorrichtung angeordnet ist. Alternativ kann auch der erste Magnet und/oder der zweite Magnet etwas rotiert werden, um einen Versatz der magnetischen Feldlinien zu erzielen.

Vorzugsweise ist der erste Magnet außerhalb der Fördervorrichtung angeordnet. Dies führt zu einer vereinfachten Fertigung der Handhabungsvorrichtung, da kein Magnet in die Fördervorrichtung eingebracht werden muss.

Alternativ kann der erste Magnet innerhalb der Fördervorrichtung angeordnet sein, was zu einer kleinbauenden Handhabungsvorrichtung führt.

Besonders bevorzugt und mit eigenständigen erfinderischen Charakter ist die Handhabungsvorrichtung dann, wenn eine Blaslufteinbringvorrichtung vorgesehen ist, die derart ausgebildet ist, Blasluft in wenigstens einer Aufnahme einzubringen, insbesondere derart, dass ein in der Aufnahme angeordneter stabförmiger Artikel sich vom Muldengrund der Aufnahme anhebt. In dem Moment, in dem sich der stabförmige Artikel vom Muldengrund anhebt, kann dieser nämlich besonders gut durch das Magnetfeld ausgerichtet werden.

Bevorzugt ist es, wenn wenigstens eine Aufnahme mit einer Saugluftöffnung zum Halten der stabförmigen Artikel versehen ist, wobei eine Blaslufteinbringvorrichtung zum Einbringen von Blasluft in die Saugluftöffnung vorgesehen ist, wobei die Blaslufteinbringvorrichtung insbesondere derart ausgebildet ist, im Wirkbereich des ersten Magneten Blasluft in die Saugluftöffnung einzubringen, so dass sich ein in der Aufnahme befindlicher stabförmiger Artikel vom Muldengrund der Aufnahme anhebt.

Es ist zwar bekannt, Saugluft beim Ausrichten eines stabförmigen Artikels zu reduzieren oder auszustellen. Erfindungsgemäß ist allerdings eine aktive Belüftung, d.h. ein Blasluftstrom, der in die Aufnahme gebracht wird, für eine Ausrichtung der stabförmigen Artikel, insbesondere eine Drehung um die Längsachse, bevorzugt. Hierdurch können sich die stabförmigen Artikel kurzzeitig von dem Muldengrund der Aufnahme lösen und sich so ohne Reibungswiderstand entlang der magnetischen Feldlinien ausrichten. Hierdurch ist eine einfachere und viel genauere Ausrichtung möglich. Zudem führt der Bernoulli-Effekt dazu, dass der stabförmige Artikel von Luft umströmt wird und so insgesamt nicht aus der Aufnahme herausfliegt, sondern dort gehalten und ausgerichtet wird. Diese Idee hat einen eigenen erfinderischen Charakter.

Vorzugsweise ist die Blaslufteinbringvorrichtung ausgebildet, Blasluft oder einen Blasluftstrom von außen in die Aufnahme der Fördervorrichtung einzubringen, so dass sich ein in der Aufnahme befindlicher stabförmiger Artikel vom Muldengrund der Aufnahme anhebt. Es ist somit auch möglich, anstelle eines Blasluftstroms oder einer Blasluft, die durch eine Saugluftöffnung eingebracht werden kann, anstelle dessen von außen Blasluft zuzuführen. Diese Blasluft wird vorzugsweise quer zur Förderrichtung der Fördervorrichtung ausgerichtet und insbesondere vorzugsweise quer entgegen der Förderrichtung der Fördervorrichtung ausgerichtet, so dass die Blasluft sich an dem in der Aufnahme befindlichen stabförmigen Artikel vorbeibewegt und sich zwischen dem Muldengrund und dem stabförmigen Artikel bewegt, wodurch der Artikel angehoben wird.

Vorzugsweise ist über der Aufnahme eine Abdeckung vorgesehen, die ein Herausfallen von stabförmigen Artikeln aus der Aufnahme verhindert. Diese Abdeckung, die im Rahmen der Erfindung auch eine Haube sein kann, überdeckt vorzugsweise eine Aufnahme oder mehr als eine Aufnahme, insbesondere vorzugsweise ein bis zehn Aufnahmen, vorzugsweise zwei bis acht Aufnahmen, insbesondere vorzugsweise drei bis sechs Aufnahmen. Die Abdeckung ist hierbei beabstandet zu der Fördervorrichtung, dergestalt, dass zwischen der Fördervorrichtung oder dem Außenumfang der Fördervorrichtung und der Abdeckung weniger Platz ist als ein Durchmesser eines in den Aufnahmen zu fördernden stabförmigen Artikels.

Eine weitere bevorzugte Ausführungsform liegt vor, wenn der erste Magnet und/oder der zweite Magnet eine Breite in Richtung quer, insbesondere senkrecht, zur Förderrichtung aufweist, die kleiner als die Länge der zu schneidenden stabförmigen Artikel ist oder dass der Wirkbereich des ersten Magneten und/oder des zweiten Magneten in Richtung quer, insbesondere senkrecht, zur Förderrichtung auf einen vorgebbaren Bereich begrenzt wird oder ist. Hierdurch wird immer nur der Bereich ausgerichtet, der tatsächlich am Ende durchgeschnitten werden soll. Dies ist insbesondere bei längeren stabförmigen Artikeln relevant, da ein in den stabförmigen Artikel eingebrachtes Metallband sich über eine gewisse Länge verdrillt oder auch eine Lageverschiebung über die Länge gesehen möglich ist. Die Breite quer zur Förderrichtung ist insbesondere in einer Förderebene der längserstreckten Aufnahmen oder der stabförmigen Artikel, also bei einer Fördervorrichtung, die als Fördertrommel ausgebildet ist, quer, insbesondere senkrecht, zur Förderrichtung und quer, insbesondere senkrecht zu einer Radialen der Fördervorrichtung.

Vorzugsweise liegt der vorgebbare Bereich in einer Größe von 1 cm bis 3 cm. Vorzugsweise ist die Breite des ersten Magneten und/oder des zweiten Magneten in einem Bereich von 0,5 cm bis 3 cm, insbesondere vorzugsweise zwischen 1 cm und 2 cm.

Eine erfindungsgemäße Maschine der Tabak verarbeitenden Industrie umfasst eine erfindungsgemäße oder bevorzugte Handhabungsvorrichtung, die vorstehend beschrieben ist und eine Schneidvorrichtung, die stromabwärts des ersten Magneten der Handhabungsvorrichtung angeordnet ist, wobei die Schneidvorrichtung ausgebildet ist, einen mittels der Handhabungsvorrichtung ausgerichteten stabförmigen Artikel zu schneiden, wobei insbesondere ein Schnitt in dem Bereich des stabförmigen Artikels erfolgt, der durch den ersten Magneten und/oder den zweiten Magneten ausgerichtet wurde.

Der Schnitt erfolgt insbesondere vorzugsweise mittig in dem Bereich des stabförmigen Artikels, der durch den ersten Magneten und/oder den zweiten Magneten ausgerichtet wurde.

In einer bevorzugten Ausführungsform weist eine Schneide der Schneidvorrichtung einen Keilwinkel zwischen 30° und 45° auf und/oder eine Schneide der Schneidvorrichtung weist eine Schneidenspitzenbreite zwischen 12 µm und 24 µm auf.

Der Keilwinkel ist vorzugsweise in einem Bereich zwischen 32° und 43°, insbesondere vorzugsweise in einem Bereich von 34° bis 41°, insbesondere vorzugsweise 36° bis 39°. Die Schneidenspitzenbreite liegt vorzugsweise in einem Bereich zwischen 14 µm und 22 µm, insbesondere vorzugsweise zwischen 16 µm und 20 µm, insbesondere vorzugsweise bei 18 µm.

Durch diese vorzugsweise Ausführungsform der Schneidvorrichtung werden zu starke Ausbrüche des Werkstoffs, vorzugsweise des Hartmetallwerkstoffs, vermieden. Insbesondere wird hierdurch ein abrasiver Verschleiß gefördert.

Durch die Kombination der Ausrichtung des Metallbandes zum Messer wie vorstehend beschrieben, einem geeigneten Werkstoff, einem Keilwinkel im genannten Bereich sowie einer Schneidenpräparation durch die genannte Schneidenspitzenbreite in dem eben genannten Bereich können effektiv Materialausbrüche besonders gut vermieden werden.

Die Schneidenspitzenbreite ergibt sich durch eine Art Vorstumpfen der Schneide, indem die oberste Spitze der Schneide abgenommen wird, so dass sich eine definierte Schneidenspitzenbreite einstellt.

Vorzugsweise umfasst die Schneidvorrichtung ein Kreismesser.

Vorzugsweise ist die Fördervorrichtung eine Schneidtrommel, wobei die Aufnahmen als Aufnahmemulden ausgebildet sind, die eine Schneidnut aufweisen, die einen nichtmagnetischen Stahl aufweist. Vorzugsweise ist die Schneidnut aus einem nichtmagnetischen Stahl. Vorzugsweise ist das Material der Schneidnut härter als das Material der Schneide der Schneidvorrichtung.

Ferner umfasst die Fördervorrichtung ein nichtmagnetisches und/oder nichtmagnetisierbares Material wie beispielsweis Aluminium.

Die Aufgabe wird ferner gelöst durch ein Verfahren zum Bearbeiten von stabförmigen Artikeln der Tabak verarbeitenden Industrie, wobei die stabförmigen Artikel magnetisches oder magnetisierbares Material, insbesondere ein flaches Metallband enthalten, mit den folgenden Verfahrensschritten:
- Fördern der stabförmigen Artikel in Aufnahmen einer Fördervorrichtung quer zur Längsachse der Aufnahmen,
- Fördern der stabförmigen Artikel durch ein Magnetfeld, dessen Feldlinien insbesondere in einem Winkel von -30° bis +30° zu der Förderrichtung angeordnet sind,
- Ausrichten der stabförmigen Artikel im Magnetfeld, wobei sich die stabförmigen Artikel um die Längsachse drehen,
- Schneiden der stabförmigen Artikel in einem Bereich der stabförmigen Artikel, der zum Ausrichten der stabförmigen Artikel verwendet wurde, wobei der Schnittwinkel insbesondere in einem Bereich 5° und 50° liegt.

Durch die optimale Ausrichtung des stabförmigen Artikels ist ein effizientes Schneiden mit hoher Standzeit der Schneidvorrichtung und gutem Schnittbild möglich.

Die Feldlinien sind vorzugsweise an einem Ort in einem Winkel von -30° bis +30° zu der Förderrichtung der stabförmigen Artikel oder der Aufnahmen einer die stabförmigen Artikel fördernden Fördervorrichtung angeordnet, in dem die stabförmigen Artikel und/oder die Aufnahmen in dem durch den oder die Magneten hervorgerufenen stärksten Magnetfeld angeordnet sind oder in einem Bereich, der dem oder den Magneten während der Förderung der stabförmigen Artikel am nächsten ist oder sind.

Vorzugsweise ist der untere Bereich des Winkels der Feldlinien zu der Förderrichtung bei -25°, insbesondere vorzugsweise bei -20°, insbesondere vorzugsweise bei -15°, insbesondere vorzugsweise bei -12°, insbesondere vorzugsweise bei -10°, insbesondere vorzugsweise bei -8°, insbesondere vorzugsweise bei -6°, insbesondere vorzugsweise bei -4°, insbesondere vorzugsweise bei -2°.

Vorzugsweise ist der obere Bereich des Winkels der Feldlinien zu der Förderrichtung bei 29°, insbesondere vorzugsweise bei 28°, insbesondere vorzugsweise bei 27°, insbesondere vorzugsweise bei 26°, insbesondere vorzugsweise bei 25°, insbesondere vorzugsweise bei 24°, insbesondere vorzugsweise bei 23°, insbesondere vorzugsweise bei 22°, insbesondere vorzugsweise bei 21°, insbesondere vorzugsweise bei 20°, insbesondere vorzugsweise bei 19°, insbesondere vorzugsweise bei 18°, insbesondere vorzugsweise bei 17°, insbesondere vorzugsweise bei 16°, insbesondere vorzugsweise bei 14°, insbesondere vorzugsweise bei 12°, insbesondere vorzugsweise bei 10°, insbesondere vorzugsweise bei 8°, insbesondere vorzugsweise bei 6°, insbesondere vorzugsweise bei 4°, insbesondere vorzugsweise bei 2° oder vorzugsweise bei 0°.

Vorzugsweise geschieht das Ausrichten unmittelbar vor dem Schneiden. Hierdurch können weitere Lageänderungen des stabförmigen Artikels, insbesondere die durch Übergabe des stabförmigen Artikels auf andere Förderorgane entstehen könnten, vermieden werden.

Vorzugsweise wird je Artikel nur ein Schnitt zurzeit ausgeführt. Dies ermöglicht an der Stelle, an der der Schnitt ausgeführt wird, eine optimale Orientierung des magnetischen oder magnetisierbaren Materials, insbesondere des Metallbandes.

Vorzugsweise werden zwei geschnittene Artikel zur gleichen Zeit in einer Aufnahme angeordnet, durch jeweils ein Magnetfeld gefördert und jeweils im Magnetfeld ausgerichtet. Vorzugsweise werden diese geschnittenen Artikel danach erneut geschnitten. Bei zwei geschnittenen Artikeln, die zur gleichen Zeit in einer Aufnahme angeordnet sind, werden somit zwei Magnetfelder verwendet, die in einem Bereich der zwei geschnittenen Artikel eine Ausrichtung der beiden Artikel jeweils ermöglichen, und zwar danach, wie sich das magnetische oder magnetisierbare Material, insbesondere das flache Metallband, im Magnetfeld ausrichtet.

Es wird dann vorzugsweise anschließend jeder der beiden geschnittenen Artikel noch einmal in diesem Bereich, in dem die Ausrichtung stattgefunden hat, geschnitten. Die Ausrichtung der jeweiligen beiden geschnittenen Artikel geschieht wie vorstehend schon einmal ausgeführt.

Anschließend können die so geschnittenen insgesamt vier Artikel, die in einer Aufnahme angeordnet sind, erneut durch vier Magnetfelder geführt und jeweils ausgerichtet werden, um noch einmal geschnitten zu werden.

Es wird somit kein Mehrfachschnitt an einem Artikel oder einem geschnittenen Artikel ausgeführt, sondern immer nur ein Schnitt, nachdem dieser Artikel in dem Bereich, in dem geschnitten werden soll, ausgerichtet wurde.

Vorzugsweise wird zum Ausrichten der stabförmigen Artikel oder geschnittenen Artikel diese mit einem Blasluftstoß von einem Muldengrund der Aufnahme angehoben. Durch diese Maßnahme ist eine besonders genaue Ausrichtung möglich.

Der erste Magnet und/oder der zweite Magnet ist bevorzugt jeweils ein Permanentmagnet. Hierdurch wird ein starkes Erhitzen der Magneten vermieden. Zudem kann hierdurch die Handhabungsvorrichtung kleinbauend sein. Alternativ kann der erste Magnet und/oder der zweite Magnet ein Elektromagnet sein.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Schnittdarstellung durch eine erfindungsgemäße Handhabungsvorrichtung,
- Fig. 2: eine schematische Ausschnittsdarstellung einer erfindungsgemäßen Handhabungsvorrichtung,
- Fig. 3a: eine schematische Schnittdarstellung durch eine erfindungsgemäße Handhabungsvorrichtung in einer anderen Ausführungsform,
- Fig. 3b: einen Ausschnitt aus Fig. 3a im Bereich der Aufnahmen zwischen den beiden Magneten,
- Fig. 4: eine Schnittdarstellung durch eine Schneide der Schneidvorrichtung und
- Fig. 5: eine schematische Draufsicht auf den Schneidprozess eines stabförmigen Artikels, und
- Fig. 6: eine schematische Darstellung eines Ausschnitts einer erfindungsgemäßen Handhabungsvorrichtung in einer anderen Ausführungsform.

Im Rahmen der Erfindung sind Merkmale, die mit "insbesondere" oder "vorzugsweise" gekennzeichnet sind, als fakultative Merkmale zu verstehen.

In den Zeichnungen sind jeweils gleiche oder gleichartige Elemente und/oder Teile mit denselben Bezugsziffern versehen, so dass von einer erneuten Vorstellung jeweils abgesehen wird.

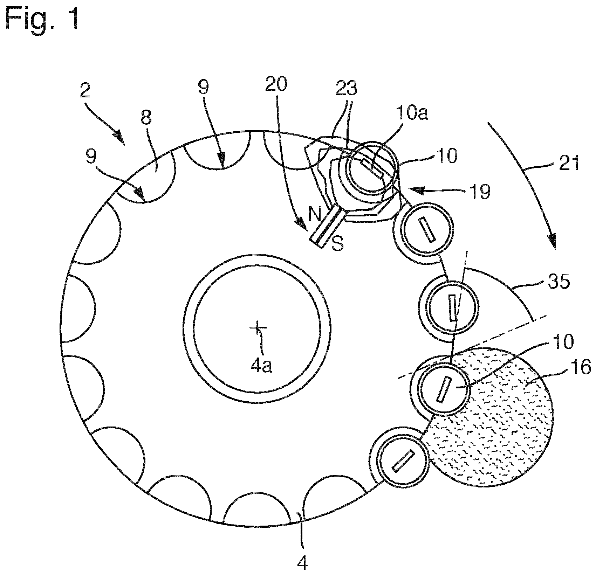

Fig. 1 zeigt schematisch eine Schnittdarstellung durch eine erfindungsgemäße Handhabungsvorrichtung 2. Die Handhabungsvorrichtung 2 umfasst eine Fördervorrichtung 4, die als Schneidtrommel ausgebildet ist und sich um eine Drehachse 4a in Förderrichtung 21 dreht. Die Fördervorrichtung 4 weist Aufnahmen 8 in Form von Aufnahmemulden auf. Die Aufnahmemulden weisen einen Muldengrund 9 auf, in die stabförmige Artikel 10 eingebracht werden können. Diese werden üblicherweise durch Saugluft auf dem Muldengrund gehalten, was in Fig. 1 allerdings nicht dargestellt ist.

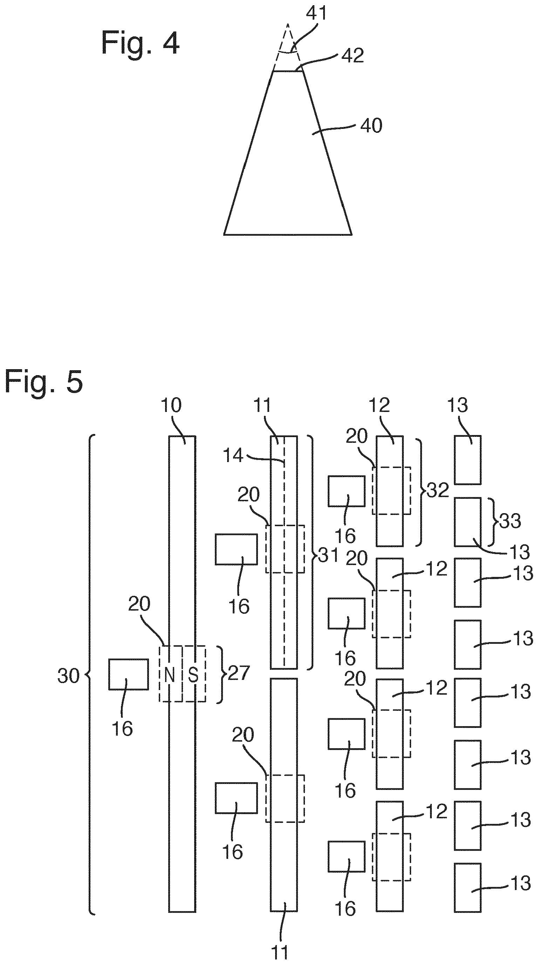

Die stabförmigen Artikel 10 weisen ein Metallband 10a auf, das sich entlang der Längsachse der stabförmigen Artikel 10 erstreckt und flach ausgebildet ist. Die Längsachse 14 der stabförmigen Artikel 10 ist in Fig. 5 beispielsweise schematisch dargestellt.

Es ist ein erster Magnet 20 vorgesehen, der als Permanentmagnet ausgebildet ist und dessen magnetische Polarität so ausgestaltet ist, dass die Pole in Förderrichtung 21 wechseln. In diesem Ausführungsbeispiel wechseln die Pole von einem Nordpol in Förderrichtung 21 zu einem Südpol.

Die Ausrichtung ist in Fig. 1 so, dass die Polgrenze des ersten Magneten 20 radial in der Fördertrommel in der Fördervorrichtung 4 ausgebildet ist. Durch diese Magnetanordnung ergibt sich ein Magnetfeld 19, das im Bereich der Aufnahmen 8 und/oder des Metallbandes 10a des stabförmigen Artikels 10, das sich unmittelbar in der Nachbarschaft des Magneten 20 befindet, im Wesentlichen tangential ausgerichtet ist. Man könnte den Magneten auch etwas verdrehen, so dass sich ein Winkel der Feldlinien 23 des Magnetfeldes 19 von 0° bis 30° zur Tangente der Fördervorrichtung 4 im Bereich der Fördervorrichtung 4 ergibt.

Unmittelbar anschließend an das Ausrichten durch die Anordnung des Magneten 20 und die Magnetpole S und N, wie in Fig. 1 gezeigt, ergibt sich eine Ausrichtung des Metallbandes 10a in einer Tangente zur Fördervorrichtung 4. Anschließend an die Ausrichtung des stabförmigen Artikels 10 wird dieser durch eine Schneidvorrichtung 16 in Form eines Kreismessers geschnitten. Der Schneidwinkel, d.h. die Tangente des Kreismessers zu der Ausrichtung des Metallbands, ist bevorzugt in einem Bereich von 0° bis 60°, insbesondere 0° bis 50°. In dem Ausführungsbeispiel der Fig. 1 ist ein Winkel von ungefähr 60° gezeigt. Mit Vergrößerung des Winkels der Feldlinien 23 von der Tangente der Fördervorrichtung 4 weg würde sich der Schnittwinkel 35 verkleinern.

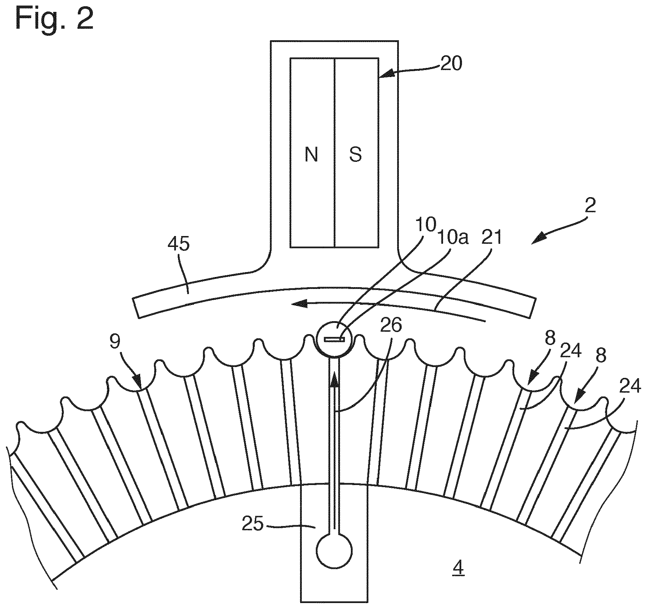

Fig. 2 zeigt eine andere Ausführungsform der erfindungsgemäßen Handhabungsvorrichtung 2. Hier ist ein erster Magnet 20 außerhalb der Fördervorrichtung 4 angeordnet. Die Förderrichtung 21 ist auch anders als in Fig. 1, in diesem Fall von rechts nach links. In dieser schematischen Schnittdarstellung ist der Trommelring der als Fördertrommel ausgebildeten Fördervorrichtung 4 mit Saugluftöffnungen 24 oder Saugluftbohrungen versehen, die in die Aufnahmen 8 reichen. Es ist nur an einer Stelle schematisch ein stabförmiger Artikel 10 dargestellt, und zwar in dem Moment, in dem dieser stabförmige Artikel 10 sich genau gegenüber des ersten Magneten 20 befindet. Um eine einfachere Ausrichtung des stabförmigen Artikels 10 zu ermöglichen, ist eine Blaslufteinbringvorrichtung 25 vorgesehen, die genau an dieser Stelle dafür sorgt, dass Blasluft 26 oder ein Blasluftstoß in die Saugluftöffnung 24 eingebracht wird, so dass sich der stabförmige Artikel 10 vom Muldengrund 9 der Aufnahme 8 etwas löst und somit ohne Reibverluste um die Längsachse des stabförmigen Artikels 10 gedreht werden kann. Nach dem Ausrichten wird dann der stabförmige Artikel 10 wieder durch Einbringen von Saugluft in die Saugluftöffnung 24 angesaugt und am Muldengrund 9 gehalten. Der erste Magnet 20 ist durch eine Verschutzung 45 geschützt. Die Verschutzung 45 ist allerdings nicht notwendig, sondern bevorzugt.

Der Trommelring kann aus Aluminium sein, wobei eine Schneidnut vorgesehen sein kann, die aus einem Edelstahl ist, der nicht magnetisch ist.

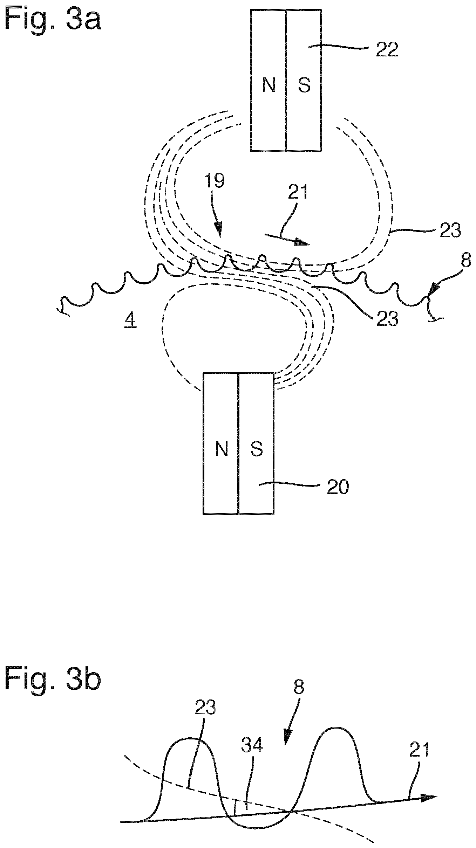

Fig. 3a zeigt schematisch einen Ausschnitt eines Teils einer Handhabungsvorrichtung 2 mit einem ersten Magneten 20 und einem zweiten Magneten 22. Diese sind gegenüberliegend angeordnet, d.h. der erste Magnet 20 ist innerhalb der Fördervorrichtung 4 angeordnet und der zweite Magnet 22 ist außerhalb der Fördervorrichtung 4 angeordnet. Die beiden Magneten 20 und 22 sind etwas versetzt zueinander, insbesondere translatorisch versetzt zueinander, angeordnet, so dass die Feldlinien 23 des Magnetfelds 19 im Bereich der Aufnahmen 8, die zwischen den beiden Magneten angeordnet sind, und zwar in nächster Nachbarschaft, etwas von der Tangente abweichen. In diesem Ausführungsbeispiel ist ein Winkel von ungefähr 15° vorgesehen.

Fig. 3b zeigt einen Ausschnitt aus Fig. 3a in einer schematischen Darstellung. Es ist eine magnetische Feldlinie 23 gezeigt und der Winkel 34 der magnetischen Feldlinie 23 zu der Förderrichtung 21, die als Tangente zu einer Aufnahme 8 dargestellt ist. Hier ist ein Winkel von ca. 15° vorgesehen.

Durch die Ausführungsform der Fig. 3a mit zwei Magneten 20, 22 verdichtet sich das Magnetfeld 19 im Bereich der Aufnahmen 8, wodurch dort ein stärkeres Magnetfeld 19 als bei der Verwendung von einem einzigen Magneten vorgesehen ist und ein größerer Bereich der Parallelität von Magnetfeldlinien in Förderrichtung 21.

Fig. 4 zeigt eine bevorzugte Schneide 40 einer Schneidvorrichtung 16. Diese Schneide weist einen Keilwinkel 41 in einem Bereich von 30° auf. Ein bevorzugter Bereich des Keilwinkels 41 liegt zwischen 30° und 45°. Zudem ist die Spitze abgetragen oder vorgestumpft, und zwar so, dass sich eine Schneidenspitzenbreite 42 in einem Bereich von 12 bis 24 µm ergibt.

Fig. 5 zeigt einen schematischen Verfahrensablauf. Es wird zunächst ein stabförmiger Artikel 10 achtfacher Gebrauchslänge, wobei hier die Länge mit der Bezugsziffer 30 versehen ist, durch einen Magneten 20 ausgerichtet. Der Magnet 20 hat eine Polarität, wie in Fig. 5 beispielsweise gezeigt. Die Breite 27 des Magneten 20 ist in Fig. 5 auch dargestellt. Es ist also gezeigt, dass nur ein kleiner Teil der stabförmigen Artikel 10 durch ein Magnetfeld 19 beeinflusst wird, so dass nur in diesem Bereich eine Kraft wirkt, mit der der stabförmige Artikel 10 ausgerichtet wird.

Anschließend wird durch die Schneidvorrichtung 16 dieser stabförmige Artikel 10 achtfacher Gebrauchslänge in zwei stabförmige Artikel 11 vierfacher Gebrauchslänge geschnitten.

Der stabförmige Artikel 11 vierfacher Gebrauchslänge hat eine Länge 31. In dem oberen stabförmigen Artikel 11 aus Fig. 5 ist die Längsachse 14 schematisch angedeutet. Auch hier findet wieder im Bereich der beiden Schneidvorrichtungen 16 jeweils eine Ausrichtung über einen Magneten 20 und ein anschließendes Schneiden durch die angedeutete Schneidvorrichtung 16 statt.

Anschließend werden die so geschnittenen vier stabförmigen Artikel 12 zweifacher Gebrauchslänge wieder durch in diesem Fall jeweils einen Magneten, also insgesamt vier Magnetvorrichtungen 20, ausgerichtet und durch jeweils eine Schneidvorrichtung 16 geschnitten, so dass sich insgesamt acht stabförmige Artikel 13 mit einer Länge 33 ergeben. Die stabförmigen Artikel 12 zweifacher Gebrauchslänge haben eine Länge 32. Die Länge 33 der Artikel 13 entspricht einer einfachen Gebrauchslänge.

Durch diese Verfahrensführung wird sichergestellt, dass immer in dem Bereich, in dem ein Schnitt stattfinden soll, das in dem stabförmigen Artikel befindliche Metallband 10a optimal ausgerichtet wird.

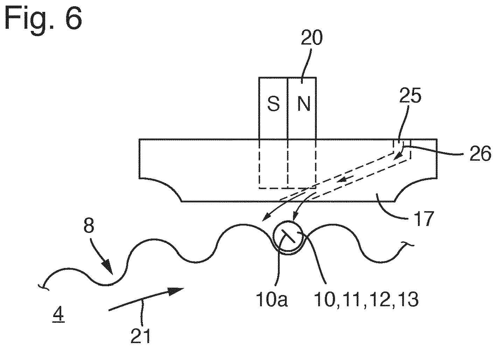

Fig. 6 zeigt schematisch einen Ausschnitt einer erfindungsgemäßen Handhabungsvorrichtung in einer weiteren Ausführungsform. Die Fördervorrichtung 4 kann hier als Trommel ausgebildet sein und Aufnahmen 8 aufweisen. In einer Aufnahme 8 ist schematisch ein stabförmiger Artikel 10, 11, 12, 13 dargestellt, der ein Metallband 10a aufweist. Im Bereich des Magnetfeldes des ersten Magneten 20 ist eine Blaslufteinbringvorrichtung 25 vorgesehen, mittels der Blasluft 26 in die Aufnahme 8 eingebracht wird. Die Aufnahme 8 ist durch den stabförmigen Artikel 10, 11, 12, 13 belegt. Durch Vorsehen von Blasluft 26 in diesen Bereich von außerhalb der Aufnahme gelangt die Blasluft 26 zum Muldengrund und hebt den stabförmigen Artikel 8 hoch. Zudem kann hier eine Abdeckung 17 vorgesehen sein, um zu verhindern, dass der stabförmige Artikel 10, 11, 12, 13 aus der Mulde 8 vollständig entweichen kann. Nachdem sich der stabförmige Artikel 10, 11, 12, 13 in den Feldlinien des Magneten 20 ausgerichtet hat, wird dieser wieder durch nicht dargestellte Saugöffnungen in den Muldengrund der Aufnahme 8 abgesenkt und gehalten.

Stabförmige Artikel mehrfacher Gebrauchslänge können beispielsweise durch eine Vorrichtung gemäß der EP 3 550 995 A1 (WO 2018/108623 A1) jeweils einzeln geschnitten werden. Bevorzugterweise ist hier auf die Fig. 2 und 3 der EP 3 550 995 A1 zu verweisen. Die vorliegende Erfindung kann sehr gut mit der Offenbarung aus der EP 3 550 995 A1 kombiniert werden. Beispielsweise kann eine Ausrichtung gemäß der vorliegenden Erfindung auf der Trommel 1 und/oder dem Trommelring 100 geschehen. Die stabförmigen Artikel 8 aus der Fig. 2, die auf der Trommel 1 in der EP 3 550 995 A1 angeordnet sind, werden dann nach der magnetischen Ausrichtung auf die Trommel 3 übergeben und dort geschnitten. Ein geschnittener stabförmiger Artikel kann beim ersten Umlauf von der Trommel 3 übergeben werden. Der zweite geschnittene stabförmige Artikel in der Aufnahme der Trommel 3 kann verschoben werden und im zweiten Umlauf dann von der Trommel 3 übergeben werden. Auch die anderen Ausführungsformen der EP 3 550 995 A1 eignen sich gut für eine Kombination mit der vorliegenden Erfindung.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 2: Handhabungsvorrichtung
- 4: Fördervorrichtung
- 4a: Drehachse
- 8: Aufnahme
- 9: Muldengrund
- 10, 11, 12, 13: stabförmiger Artikel
- 10a: Metallband
- 14: Längsachse
- 16: Schneidvorrichtung
- 17: Abdeckung
- 19: Magnetfeld
- 20: erster Magnet
- 21: Förderrichtung
- 22: zweiter Magnet
- 23: magnetische Feldlinien
- 24: Saugluftöffnung
- 25: Blaslufteinbringvorrichtung
- 26: Blasluft
- 27: Breite vom Magnet
- 30, 31, 32, 33: Länge
- 34: Winkel
- 35: Schnittwinkel
- 40: Schneide
- 41: Keilwinkel
- 42: Schneidenspitzenbreite
- 45: Verschutzung

- N: Magnetpol
- S: Magnetpol

## Patentansprüche

1. Handhabungsvorrichtung (2) für stabförmige Artikel (10, 11, 12, 13) der Tabak verarbeitenden Industrie, wobei die stabförmigen Artikel (10-13) magnetisches oder magnetisierbares Material, insbesondere ein, insbesondere flaches, Metallband (10a), enthalten, wobei die Handhabungsvorrichtung (2) eine Fördervorrichtung (4) mit Aufnahmen (8) zur Aufnahme der stabförmigen Artikel (10-13) umfasst, und wobei die Handhabungsvorrichtung (2) einen ersten Magneten (20) aufweist, wobei die Fördervorrichtung (4) ausgebildet ist, in einem Wirkbereich des ersten Magneten (20) die Aufnahmen (8) in einer Förderrichtung (21) zu bewegen, **dadurch gekennzeichnet, dass** in Förderrichtung (21) der Aufnahmen (8) der erste Magnet (20) eine wechselnde Polung (N, S) aufweist.

2. Handhabungsvorrichtung (2) nach Anspruch 1, **dadurch gekennzeichnet, dass** die Handhabungsvorrichtung (2) einen zweiten Magneten (22) aufweist, wobei der zweite Magnet (22) gleichpolig zum ersten Magneten (20) angeordnet ist, wobei die Aufnahme (8), die in dem Wirkbereich des ersten Magneten (20) ist, zwischen dem ersten Magneten (20) und dem zweiten Magneten (22) angeordnet ist.

3. Handhabungsvorrichtung (2) nach Anspruch 1 oder 2, **dadurch gekennzeichnet, dass** der erste Magnet (20) und/oder der zweite Magnet (22) derart angeordnet ist oder sind, dass die magnetischen Feldlinien (23) im Bereich der Aufnahme (8), die den ersten Magneten (20) und/oder den zweiten Magneten (22) am nächsten ist, in einem Winkel von -30° bis +30° zur Förderrichtung (21) dieser Aufnahme (8) ist.

4. Handhabungsvorrichtung (2) nach einem der Ansprüche 1 bis 3, **dadurch gekennzeichnet, dass** der erste Magnet (20) außerhalb der Fördervorrichtung (4) angeordnet ist.

5. Handhabungsvorrichtung (2) nach einem der Ansprüche 1 bis 4 oder nach dem Oberbegriff von Anspruch 1, **dadurch gekennzeichnet, dass** eine Blaslufteinbringvorrichtung (25) vorgesehen ist, die dazu ausgebildet ist, Blasluft (26) in wenigstens eine Aufnahme (8) einzubringen, insbesondere derart, dass ein in der Aufnahme (8) angeordneter stabförmiger Artikel (10-13) sich vom Muldengrund (9) der Aufnahme (8) anhebt, wobei insbesondere wenigstens eine Aufnahme (8) mit einer Saugluftöffnung (24) zum Halten der stabförmigen Artikel (10-13) versehen ist, wobei die Blaslufteinbringvorrichtung (25) zum Einbringen von Blasluft (26) in die Saugluftöffnung (24) vorgesehen ist, wobei die Blaslufteinbringvorrichtung (25) insbesondere derart ausgebildet ist, im Wirkbereich des ersten Magneten (20) Blasluft (26) in die Saugluftöffnung (24) einzubringen, so dass sich ein in der Aufnahme (8) befindlicher stabförmiger Artikel (10-13) vom Muldengrund (9) der Aufnahme (8) anhebt.

6. Handhabungsvorrichtung (2) nach Anspruch 5, **dadurch gekennzeichnet, dass** die Blaslufteinbringvorrichtung (25) ausgebildet ist, Blasluft (26) von außen in die Aufnahme (8) der Fördervorrichtung (4) einzubringen, so dass sich ein in der Aufnahme (8) befindlicher stabförmiger Artikel (10-13) vom Muldengrund (9) der Aufnahme (8) anhebt.

7. Handhabungsvorrichtung (2) nach einem der Ansprüche 1 bis 6, **dadurch gekennzeichnet, dass** über der Aufnahme (8) eine Abdeckung (17) vorgesehen ist, die ein Herausfallen von stabförmigen Artikeln (10-13) aus der Aufnahme (8) verhindert.

8. Handhabungsvorrichtung (2) nach einem der Ansprüche 1 bis 7, **dadurch gekennzeichnet, dass** der erste Magnet (20) und/oder der zweite Magnet (22) eine Breite (27) in Richtung quer, insbesondere senkrecht, zur Förderrichtung (21) aufweist, die kleiner als die Länge (30-33) der zu schneidenden stabförmigen Artikel ist oder dass der Wirkbereich des ersten Magneten (20) und/oder des zweiten Magneten (22) in Richtung quer, insbesondere senkrecht, zur Förderrichtung (21) auf einen vorgebbaren Bereich begrenzt wird oder ist.

9. Maschine der Tabak verarbeitenden Industrie, umfassend eine Handhabungsvorrichtung (2) nach einem der Ansprüche 1 bis 8 und umfassend eine Schneidvorrichtung (16), die stromabwärts des ersten Magneten (20) der Handhabungsvorrichtung (2) angeordnet ist, wobei die Schneidvorrichtung (16) ausgebildet ist, einen mittels der Handhabungsvorrichtung (2) ausgerichteten stabförmigen Artikel (10) zu schneiden, wobei insbesondere ein Schnitt in dem Bereich des stabförmigen Artikels (10) erfolgt, der durch den ersten Magneten (20) und/oder den zweiten Magneten (22) ausgerichtet wurde.

10. Maschine nach Anspruch 9, **dadurch gekennzeichnet, dass** eine Schneide (40) der Schneidvorrichtung (16) einen Keilwinkel (41) zwischen 30° und 45° aufweist und/oder eine Schneide (40) der Schneidvorrichtung (16) eine Schneidenspitzenbreite (42) zwischen 12 µm und 24 µm aufweist, wobei insbesondere die Fördervorrichtung (4) eine Schneidtrommel ist, wobei die Aufnahmen (8) als Aufnahmemulden ausgebildet sind, die eine Schneidnut aufweisen, die einen nichtmagnetischen Stahl aufweist.

11. Verfahren zum Bearbeiten von stabförmigen Artikeln (10-13) der Tabak verarbeitenden Industrie, wobei die stabförmigen Artikel (10-13) magnetisches oder magnetisierbares Material, insbesondere ein, insbesondere flaches, Metallband (10a) enthalten, mit den folgenden Verfahrensschritten:
- Fördern der stabförmigen Artikel (10-13) in Aufnahmen (8) einer Fördervorrichtung (4) quer zur Längsachse der Aufnahmen (8),
- Fördern der stabförmigen Artikel (10-13) durch ein Magnetfeld (19), dessen Feldlinien (23) in einem Winkel (34) von -30° bis +30° zu der Förderrichtung (21) angeordnet sind,
- Ausrichten der stabförmigen Artikel (10-13) im Magnetfeld (19), wobei sich die stabförmigen Artikel (10-13) um die Längsachse (14) drehen,
- Schneiden der stabförmigen Artikel (10-13) in einem Bereich der stabförmigen Artikel (10-13), der zum Ausrichten der stabförmigen Artikel (10-13) verwendet wurde.

12. Verfahren nach Anspruch 11, **dadurch gekennzeichnet, dass** das Ausrichten unmittelbar vor dem Schneiden geschieht.

13. Verfahren nach Anspruch 11 oder 112, **dadurch gekennzeichnet, dass** je Artikel (10-13) nur ein Schnitt zur Zeit ausgeführt wird.

14. Verfahren nach einem der Ansprüche 11-13, **dadurch gekennzeichnet, dass** zwei geschnittene Artikel (11-12) zur gleichen Zeit in einer Aufnahme (8) angeordnet und durch jeweils ein Magnetfeld (19) gefördert werden und jeweils im Magnetfeld (19) ausgerichtet werden, wobei diese geschnittenen Artikel (11-12) erneut anschließend geschnitten werden.

15. Verfahren nach einem der Ansprüche 11-14, **dadurch gekennzeichnet, dass** zum Ausrichten der stabförmigen Artikel (10-12) diese mit einem Blasluftstoß (26) von einem Muldengrund (9) der Aufnahme (8) angehoben werden.
